# EUROPEAN PATENT APPLICATION

(11) **EP 2 402 664 A2**
(43) Date of publication of application: **04.01.2012**
(21) Application number: 11171623.9
(22) Date of filing: 28.06.2011
(51) Int. Cl.: F24D 3/16

(54) **Radiant floor module**

(30) Priority: 30.06.2010 IT MI20101201
(71) Applicant: Paulon, Gianluca, 27029 Vigevano (PV) (IT); Paulon, Giuseppe, 27029 Vigevano (PV) (IT)
(72) Inventor: Paulon, Gianluca, 27029 Vigevano (PV) (IT); Paulon, Giuseppe, 27029 Vigevano (PV) (IT)
(74) Representative: Ciceri, Fabio

(57) **Abstract**

The present invention relates to a manufacturing method and a radiant floor module (1) comprising a radiant panel (2) having a fluid inlet connection (3) and a fluid outlet connection (4) and a fluid pipe (5) for communication of the fluid inlet connection (3) with the fluid outlet connection (4), a first thermally insulating panel (10), said first panel (10) having a canalization (11) for accommodating said fluid pipe (5) and an inlet (12) and an outlet (13) for said fluid inlet (3) and outlet (4) connections, It is characterized by comprising a walkable tile (50) having a surface finish, said walkable tile (50) being laid on said first panel (10) radiant panel (2) and integral therewith, a surface finish (50a) being integrally fixed to said walkable tile (50) when said radiant floor module (1) is not laid on a floor.

## Description

The present invention relates to a radiant floor module.

Radiant panel modules are known to be used in buildings in side-by-side and interconnected relation, to obtain a radiant panel floor which is designed to allow a floor to be laid thereon and joints to be formed in it.

The radiant panel may be directly laid on the slab or spaced therefrom through a support structure consisting of height-adjustable feet.

In one example, the radiant panel may be formed by pouring or molding a mass of the type as used for screed, and hence essentially consisting of inert material, cement-based and/or synthetic binder, possibly with the addition of fillers for improving mechanical and thermal conduction properties and having a layer of heat insulating material beneath it. Its upper surface is designed to allow any kind of floor to be directly laid thereon, possibly with a self-leveling compound being previously laid thereon.

In another example, the radiant panel consists of a polystyrene panel having grooves at its top, for receiving piping for a heating or cooling fluid. The upper surface of the panel is covered with an aluminum foil to improve thermal conduction between the piping and the floor panel. The upper surface of the aluminum foil is the base upon which any kind of floor may be directly laid, possibly with a self-leveling compound being previously laid thereon.

In either case, floor tilers are required to first lay the radiant panel modules and establish piping connections. Then, they can lay the customer-selected floor, i.e. parquet, carpeting or stoneware. This procedure apparently requires skilled personnel, to be employed for many hours, to complete the floor and deliver it to the customer.

In the light of the above, there arises the need to reduce floor laying costs, while still providing radiant panel floors.

Therefore, the object of this invention is to provide a radiant floor module that has such features as to fulfill the above need, while obviating the drawbacks of the prior art.

This object is fulfilled by a method of making and a radiant floor module as defined in claims 1 and 7 respectively.

This invention provides a floor module and a radiant floor obtained thereby that is ready to walk on, which means that the floor module may be laid without stopping customer's activities.

A further advantage is that the floor module allows dry application, without using glues, cement and fillers. This prevents foul smell release during the laying process.

The use of radiant heat exchangers allows a constant average temperature of about 22/23° C to be reached on the inner surfaces of the relevant room. This avoids undesirable altered air flows and dust entrainment, which would be harmful, especially in health care environments.

Further features and advantages of the radiant floor module of this invention, will be apparent from the following description of one preferred embodiment thereof, which is given by way of illustration and without limitation with reference to the accompanying figures, in which:

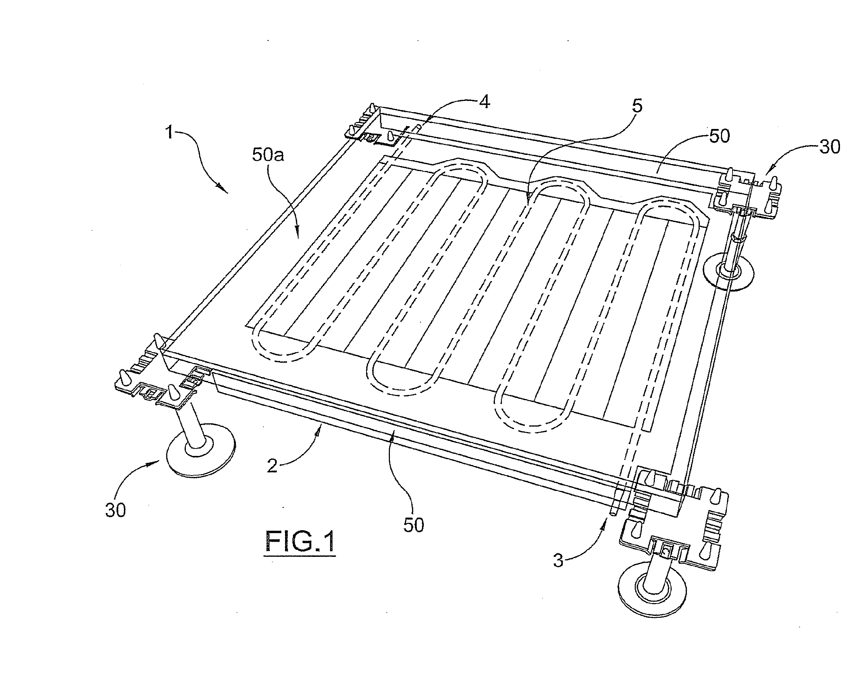

- Figure 1 is a schematic perspective view of a radiant floor module of the present invention,

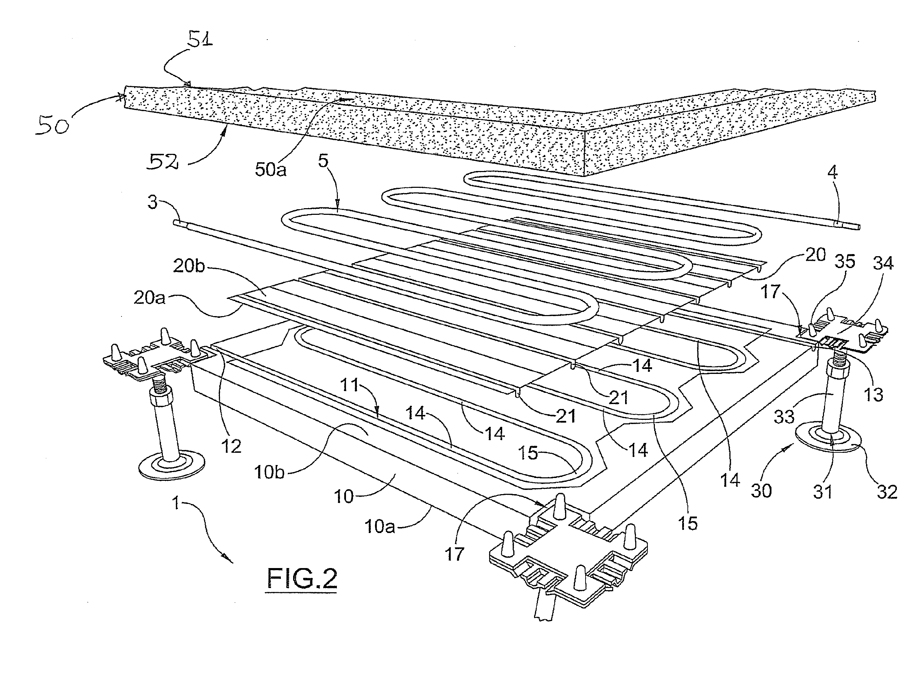

- Figure 2 is a schematic exploded view of the radiant floor module of Figure 1. Referring to the accompanying figures, numeral 1 generally designates a radiant floor module, that can be directly laid on a slab (or floor) or spaced therefrom through height-adjustable feet 30.

The radiant floor module 1 comprises:
- a radiant panel 2 having a fluid inlet connection 3 and a fluid outlet connection 4;_{[S1]}
   and a fluid pipe 5 for communication of the fluid inlet connection 3 with the fluid outlet connection
- a first thermally insulating panel 10 having a canalization 11 for holding the fluid pipe 5 and having an inlet 12 and an outlet 13 for the fluid inlet 3 and outlet 4 connections of the pipe 5.

Particularly, the radiant floor module 1 comprises:
- a walkable tile 50 having a surface finish, said walkable tile 50 being laid on the first panel 10, which is provided as a radiant panel 2 integral therewith,
- a surface finish 50a integrally fixed to said walkable tile 50 when said radiant floor module 1 is not laid on a floor, and
wherein said radiant panel 2 comprises:
- a first thermally insulating panel 10, said first panel 10 having a canalization for holding said fluid pipe 5 and an inlet 12 and outlet 13 for said fluid inlet 3 and outlet 4 connections,
- a second panel 20 made of a thermally conductive material laid on said first panel 10 and integral therewith, said second panel 20 having grooves 21 engaged in portions of said canalization 11 for holding corresponding portions of said fluid pipe 5.

Therefore, the radiant floor module 1 comprises a radiant panel 2 and a walkable tile 50 that may have a square or rectangular shape and be formed using conventional techniques.

Such walkable tile 50 has two larger surfaces, i.e. one defining an upper surface 51 and the other defining a lower surface 52 opposite to the first surface 51.

The walkable tile 50 with the surface finish 50 thereon is laid on the radiant plane 2 and integrally fixed thereto.

The radiant panel 2 has a fluid inlet connection 3, a fluid outlet connection 4 and a fluid pipe 5 for communication of the fluid inlet connection 3 with the fluid outlet connection 4.

The radiant floor module 1 also has a surface finish 50a.

Particularly, the surface finish 50a is integrally fixed, e.g. by gluing or equivalent techniques, to the upper surface 51 of the walkable tile 50 when the radiant floor module 1 is not laid on a floor.

As used herein, the term walkable tile 50 having a surface finish 50a is intended to designate the surface designed to be walked on by a user (i.e. the so-called walking surface), on which the surface or upper finish, i.e. the aesthetic component of the panel has been already applied.

In other words, according to the present invention, the radiant floor module has the surface finish 50a from the start, before being laid on the floor.

Particularly, a method of making a radiant floor module 1 is provided, which comprises the steps of providing a walkable tile 50 and providing a surface finish 50a, and joining said surface finish 50a onto the walkable tile 50, as well as joining said walkable tile 50 onto said first panel 10 for the fluid pipe 5 to be included and sealed between said surface finish 50a ad said first panel 10.

Then, once the floor module 1 has been laid, there is no need for any further masonry work to ensure walkability of the floor module.

The fluid inlet and outlet connections 3,4 are configured for connection with fluid outlet and inlet connections of radiant floor panels arranged adjacent and contiguous to the radiant floor module panel itself. This will be described in greater detail hereinbelow.

The radiant floor module 1 further comprises a second panel 20 made of a thermally conductive material which is laid on the first panel 10 and is fixed thereto.

The first panel 10 has a lower surface 10a and an upper surface 10b opposite thereto, and the panel 20 has a lower surface 20a facing towards and contacting the upper surface 10b, and an upper surface 20b.

The upper surface 20b of the panel 20 defines the surface upon which the lower surface 52 of the walkable tile 50 with the surface finish 50a is laid.

The surface of upper finish 50a of the tile 50 may be of any type, e.g. made of laminate, PVC, rubber, linoleum, carpeting, parquet, porcelain stoneware, marbles and natural granites.

As mentioned above, the radiant floor module 1 may be either directly laid on a slab or preferably raised, to be spaced therefrom.

In the latter case, support means 30 are provided, which are associated with the module 1, particularly the panel 10, for supporting the panel 10 and spacing it from the underlying slab.

In accordance with one embodiment, the support means 30 comprise a plurality of support feet 31 which may be advantageously adjusted to change the distance between the slab and the panel 10.

Each support foot 31 comprises a base 32 resting on the slab 33, a shaft 33 projecting out of the base 32 towards the panel 10 and a support plate 34 having coupling pins 35 designed to engage the floor tile 50 on the radiant panel 2.

According to this embodiment, the panel 10 is made of polystyrene, has a quadrangular shape, advantageously with 570 mm sides, and a thickness of 35 mm.

In this case, four support feet 31 are advantageously provided, which are arranged at the apices of the quadrangular panel 10, where recesses 17 are formed to establish a form-fit connection with the corresponding support feet 31.

It shall be noted that the fluid canalization 11 is formed in the thickness of the panel 10 and particularly extends from the upper surface 10b to a depth P towards the interior of the panel 10, i.e. the lower surface 10a of the panel 10, whereby the fluid canalization 11 is open at the side facing towards the panel 20.

According to one embodiment, the panel 20 is made of aluminum and has a quadrangular shape, with dimensions corresponding to the dimensions of the panel 10, in this example with 570 mm sides.

The walkable tile 50 is laid on the first panel 10 and is integrally fixed thereto.

Advantageously, the walkable tile 50 laid on each radiant panel 2 comprises a floor module having a quadrangular shape with dimensions corresponding to the dimensions of the panel 10 and the panel 20, e.g. with 570 mm sides.

Each surface finish 50a is laid on its respective walkable tile 50 which lies on its respective radiant panel 2 and is integrated therewith to form a finished radiant floor module 1, ready to be laid without requiring any further masonry work by masons and floor tilers.

For instance, the walkable tile 50 may be glued and precisely edged (preferably at the factory) so that the resulting radiant floor module can be ready to be laid on the slab with no additional masonry work.

Thus, the radiant floor modules 1 may be laid by personnel that, although skilled, has a lower cost in terms of hourly or square meter rates, as compared with the cost that would be sustained for laying a full floor on a previously laid base of radiant panels.

The second panel 20 has grooves 21 engaged in portions of the fluid canalization 11 to accommodate corresponding portions of the fluid pipe 5.

According to one embodiment, the panel 20 is a foil of thermally conductive material, e.g. aluminum. In this case, the grooves 21 may be formed by drawing of the aluminum foil.

The second panel 20 may be placed directly in contact with the first panel 10. Alternatively, a layer of adhesive material may be interposed between the upper surface 20b of the panel 20 and the lower surface 10a of the panel 10, to ensure adhesion of the second panel 20 to the first panel 10.

According to one embodiment, the fluid canalization 11 has straight portions 14 connected by curved portions 15 to form a single path 16 for communication between the inlet 12 and the outlet 13.

In one embodiment, the grooves 21 of the second panel 20 are parallel, engage respective straight portions 14 of the fluid canalization 11 and accommodate respective straight portions of the fluid pipe 5.

To improve thermal conduction between the fluid pipe 5 and the thermally conductive panel 20, the grooves 21 of the panel 20 that accommodate portions of the pipe 5 may be at least partially filled with thermally conductive material (these operations are preferably carried out at the factory). For example, a suitable material is a thermally conductive adhesive material that both ensures adhesion of the pipe 5 to the grooves 21 of the panel 20 and facilitates heat exchange between the fluid circulating in the pipe 5 and the thermally conductive material that forms the panel 20.

The radiant floor module 1 consisting of the radiant panel 2 and the walkable tile 50 may be associated and connected with additional radiant floor modules, to form a complete floor for indoor or outdoor use. Therefore, the fluid inlet connections 3 of a module 1 will be connected to the fluid outlet connections 4 of the adjacent module to form a single fluid canalization.

The floor composed of the plurality of radiant floor modules 1 will have two end modules whose fluid inlet and outlet connections 3, 4 will be connected to the delivery and discharge sides of a heating or cooling fluid circuit respectively.

According to one embodiment, the fluid inlet 3 and outlet 4 connections are located at the opposed apices of the radiant panel 2. This allows improved connection of the modules 1 that will form the final floor.

It will be appreciated from the above that the radiant floor module of the present invention obviates the prior art drawbacks.

Since each radiant floor module has a radiant panel and a surface finish integrally fixed to a walkable floor tile, the radiant floor modules may be laid by personnel that, although skilled, has a lower cost in terms of hourly or square meter rates, as compared with the cost that would be sustained for laying a complete floor on a previously laid base of radiant panels.

Those skilled in the art will obviously appreciate that a number of changes and variants may be made to the radiant floor module of the invention as described hereinbefore to meet specific needs, without departure from the scope of the invention, as defined in the following claims.

## Claims

1. A method of making a radiant floor module (1), comprising the steps of:
- providing a fluid pipe (5) having a fluid inlet connection (3) and a fluid outlet connection (4),
- providing a first thermally insulating panel (10) having a canalization (11) for accommodating said fluid pipe (5) and an inlet (12) and outlet (13) for said fluid inlet (3) and outlet (4) connections,
- placing said fluid pipe (5) in said canalization (11) of said first panel (10),
- providing a walkable tile (50), and
- providing a surface finish (50a),
**characterized in that** it includes the additional steps of:
- joining said surface finish (50a) onto said walkable tile (50) and
- joining said walkable tile (50) onto said first panel (10) so that said fluid pipe (5) is included and sealed between said surface finish (50a) and said first panel (10).

2. A method as claimed in claim 1, comprising the step of:
- providing a second panel (20) of thermally conductive material,
- fixing said second panel (20) onto said first panel (10) before placing said fluid pipe (5) in said canalization (11) of said first panel (10), said second panel (20) having grooves (21) engaged in portions of said canalization (11) to accommodate corresponding portions of said fluid pipe (5).

3. A method as claimed in claim 1 or 2, comprising the step of gluing said surface finish (50a) to said walkable tile (50) and said walkable tile (50) to said first panel (10).

4. A method as claimed in claim 3, comprising the step of gluing said second panel (20) to said first panel (10).

5. A method as claimed in any claim from 1 to 4, comprising the step of arranging said radiant floor modules (1) in contiguous positions with the corresponding fluid outlet connections (4) connected to the fluid inlet connections (3) of a contiguous radiant floor module (1).

6. A method as claimed in claim 5, comprising the step of laying said radiant floor modules (1) in a raised position relative to a slab, using support means (30) associated with each radiant floor module (1) for supporting and spacing said module (1) from the slab.

7. A radiant floor module (1) comprising:
- a radiant panel (2) having a fluid inlet connection (3) and a fluid outlet connection (4) and a fluid pipe (5) for communication of the fluid inlet connection (3) with the fluid outlet connection (4),
- a first thermally insulating panel (10), said first panel (10) having a canalization (11) for accommodating said fluid pipe (5) and an inlet (12) and outlet (13) for said fluid inlet (3) and outlet (4) connections,
**characterized in that** it comprises:
- a walkable tile (50) having a surface finish, said walkable tile (50) being laid on said first panel (10) and integral therewith,
- a surface finish (50a) integrally fixed to said walkable tile (50) when said radiant floor module (1) is not laid on a floor.

8. A radiant floor module (1) as claimed in claim 7, comprising a second panel (20) made of a thermally conductive material laid on said first panel (10) and integral therewith, said second panel (20) having grooves (21) engaged in portions of said canalization (11) for accommodating corresponding portions of said fluid pipe (5).

9. A radiant floor module (1) as claimed in claim 7 or 8, wherein each of said canalization (11) of the first panel (10) and said pipe (5) includes straight portions connected by curved portions, each groove (21) engaging a corresponding straight portion of the canalization (11) and accommodating a corresponding straight portion of the fluid pipe (5).

10. A radiant floor module (1) as claimed in claim 9, wherein said grooves (21) are at least partially filled with thermally conductive material for easier heat transfer between said fluid pipe (5) and said second panel (20).

11. A radiant floor module as claimed in any one of claims 7 to 10, wherein said first panel (10) is made of polystyrene and said second panel (20) is made of aluminum.

12. A radiant floor module (1) as claimed in any one of claims 7 to 11, wherein said fluid canalization (11) is formed within the thickness of said first panel (10) so that said fluid canalization (11) be open on the side facing towards said second panel (20).

13. A radiant floor comprising a plurality of radiant floor modules (1) as claimed in any preceding claim from 7 to 13, said radiant floor modules (1) being arranged in contiguous positions with the corresponding fluid outlet connections (4) connected to the fluid inlet connections (3) of a contiguous module (1).

14. A radiant floor as claimed in claim 13, wherein the radiant floor modules (1) are laid in a raised position relative to a slab, using support means (30) associated with each radiant floor module (1) for supporting and spacing said module (1) from the slab.
